# FASCICULE DE BREVET EUROPEEN

(11) **EP 0 827 773 B1**
(45) Date de publication et mention de la délivrance du brevet: **19.11.2003**
(21) Numéro de dépôt: 97420159.2
(22) Date de dépôt: 03.09.1997
(51) Int. Cl.: B01D 53/26, B01D 5/00, F28D 15/00, F28D 7/08, F28F 9/013

(54) **Centrale de compression et de séchage de gaz**
Kompressions- und Gastrocknungszentrale
Compression and gas drying plant

(30) Priorité: 05.09.1996 FR 9611044
(43) Date de publication de la demande: 11.03.1998
(73) Titulaire: C.T.A., 69630 Chaponost (FR)
(72) Inventeur: Perez, Jean Emmanuel, 69630 Chaponost (FR)
(74) Mandataire: Myon, Gérard Jean-Pierre

(56) Documents cités:
- EP-A- 0 067 044
- EP-A- 0 473 513
- WO-A-95/03103
- DE-A- 4 342 598
- DE-U- 9 401 979
- FR-A- 1 172 210
- GB-A- 2 074 305
- US-A- 4 166 449

## Description

L'invention a trait à une centrale de compression et de séchage de gaz utilisée dans une installation de production d'air comprimé industriel et à une installation de production d'air comprimé industriel équipée d'une telle centrale.

L'air comprimé est un fluide industriel couramment utilisé pour l'entraînement de machines pneumatiques ou comme moyen de nettoyage par soufflage. L'humidité qu'il contient est cependant une source de problèmes, car elle est susceptible de générer de la rouille, d'être incompatible avec les produits traités et peut conduire au développement de bactéries. C'est pourquoi de nombreuses installations de génération d'air comprimé sont équipées d'un sécheur d'air qui est prévu pour retirer de l'air la plus grosse partie de son humidité.

La technique de séchage la plus répandue actuellement utilise le principe frigorifique. En refroidissant l'air à une température basse, la vapeur d'eau qu'il contient se condense sous forme liquide et peut être séparée de l'air, puis éliminée. Les installations d'air comprimé sont généralement constituées d'un compresseur, d'une unité de pré-traitement destinée à refroidir l'air comprimé qui, en sortie de compresseur, est à température élevée, et d'un sécheur d'air par réfrigération. Un système de filtration est parfois adjoint à cette installation.

Ce type d'installations présente plusieurs défauts. Tout d'abord, le sécheur d'air est installé à proximité du compresseur et travaille dans une atmosphère à température élevée du fait de la chaleur rejetée par le compresseur. Ceci nuit au rendement du sécheur d'air et conduit à un surdimensionnement de celui-ci et à une diminution de sa durée de vie. De plus, l'énergie consommée par le sécheur d'air dans ces conditions est importante, ce qui diminue le rendement économique de l'installation. En outre, dans une installation de l'art antérieur, le sécheur d'air, qui est le plus souvent monobloc, est choisi en fonction du débit d'air qui le traverse, mais ne peut pas être adapté aux conditions atmosphériques extérieures de l'installation. Ainsi, pour plusieurs installations dont le débit d'air est fixé, des sécheurs d'air identiques seront utilisés, que ces installations soient mises en oeuvre en Scandinavie, en Europe ou en Afrique Equatoriale. Cette faible adaptabilité des installations de l'art antérieur aux conditions atmosphériques extérieures résulte, là encore, dans une usure prématurée des sécheurs d'air et/ou dans une surconsommation d'énergie.

De plus, les composants utilisés aujourd'hui sont classiques, mais l'installation formée de ces composants est constituée d'éléments indépendants assemblés sur site par une tuyauterie réalisée spéciàlement à cet effet. Le coût d'une installation classique peut donc être important en fonction du temps passé par l'installateur lors de sa mise en place. La pose de la tuyauterie sur site est généralement faite le plus vite possible afin de ne pas perturber l'activité normale des locaux industriels dans lesquels est mise en place l'installation, de sorte qu'il est généralement difficile, voire impossible, de procéder à des tests complets de l'installation. Il s'ensuit parfois des défauts de fonctionnement qui, compte tenu des pressions et des températures atteintes dans une telle installation, peuvent s'avérer dangereux pour le personnel travaillant à proximité de celle-ci.

L'invention vise à résoudre ces problèmes et à proposer une centrale de compression et de séchage de gaz qui peut être installée de façon rationnelle, dont le sécheur d'air est économique et dimensionné d'une façon optimale par rapport à l'utilisation prévue de la centrale de compression et de séchage et qui peut être installée de façon simple.

Dans cet esprit, l'invention concerne une centrale de compression et de séchage de gaz pour une installation de production d'air comprimé industriel, cette centrale comprenant un compresseur, une unité de pré-traitement et un sécheur de gaz caractérisée en ce que ledit sécheur de gaz comprend un échangeur de chaleur disposé sur le trajet dudit gaz, en aval et à proximité dudit compresseur, et une unité de condensation indépendante, distante dudit compresseur et comportant un compresseur frigorifique, un condenseur et un détendeur, ladite unité de condensation étant reliée audit échangeur de chaleur par un circuit de fluide frigorifique, cette unité de condensation formant une structure autonome apte à être déplacée et installée de façon unitaire, alors que l'échangeur de chaleur est relié à l'unité de condensation de façon qu'il fasse office d'évaporateur pour le fluide frigorifique.

Grâce à l'invention, l'unité de condensation indépendante et autonome peut être choisie et dimensionnée de façon à optimiser le fonctionnement du sécheur de gaz, en particulier en tenant compte des conditions atmosphériques extérieures. Cette unité étant distante du compresseur, elle ne fonctionne pas dans l'atmosphère à température élevée qui entoure celui-ci, de sorte que son rendement frigorifique est meilleur que celui des installations connues de l'art antérieur. En outre, l'unité de condensation indépendante peut être choisie parmi les unités de condensation produites en très grande série pour les installations de climatisation d'air domestique ou industriel. Compte tenu des économies d'échelle réalisées dans la production de ces unités, le coût marginal de chaque unité de condensation est faible, de sorte que les performances économiques globales de la centrale de compression et de séchage de l'invention en sont améliorées. Enfin, l'utilisation d'une unité de condensation indépendante permet de prévoir son prémontage en atelier, dans des conditions de travail adaptées, et des tests fonctionnels complets avant son expédition sur le site de montage. Son installation peut alors avoir lieu de façon unitaire.

Selon un premier aspect avantageux de l'invention, le compresseur, l'unité de pré-traitement, l'échangeur de chaleur et un séparateur de condensats forment une structure autonome, apte à être déplacée et installée de façon unitaire. Cet aspect de l'invention permet de prévoir un assemblage en série des composants de la ligne principale de la centrale de compression et de séchage, de sorte que des tests adaptés peuvent être mis en oeuvre avant son expédition sur le site d'utilisation. Ceci permet, en particulier, de réduire le temps d'installation sur site et donc les perturbations par rapport à la destination normale des locaux industriels dans lesquels est installée la centrale de l'invention.

Selon un autre aspect avantageux de l'invention, l'échangeur de chaleur comprend un premier circuit, dans lequel circule le gaz comprimé, et un second circuit, dans lequel circule le fluide frigorifique, chaque circuit ayant la forme d'un groupe de tubes parallèles et ces circuits étant disposés ensemble dans un agent intermédiaire qui les entoure et assure le transfert thermique entre les deux circuits. La présence de l'agent intermédiaire permet de conférer à l'échangeur de la centrale de l'invention une inertie thermique suffisante pour éviter que les brusques variations de la demande d'air comprimé n'induisent des variations trop importantes de sa température de sortie de l'échangeur et, en particulier, le passage de l'air à une température inférieure à 0°C à laquelle la vapeur d'eau qui s'est condensée se transforme en glace. En effet, si le fait de sécher l'air comprimé en le refroidissant est une technique simple dans son principe, celle-ci peut s'avérer difficile à mettre en oeuvre si l'on souhaite s'approcher de la température de fusion de l'eau. En pratique, la température de point de rosée de +3°C est considéré comme une limite. Le problème est donc de refroidir un flux d'air comprimé qui varie en fonction de la demande des utilisateurs, c'est-à-dire en fonction de l'air comprimé consommé. Dans les systèmes connus de l'art antérieur, sans une régulation précise et coûteuse du groupe frigorifique, on risque, lors d'une forte diminution de la demande d'air, de produire une quantité trop importante de froid et de faire descendre la température de l'air en dessous de 0°C. Ceci induit un risque de transformation en glace de la vapeur d'eau comprise dans l'air comprimé, cette transformation en glace pouvant conduire à la destruction de l'échangeur.

Grâce à l'invention et à la présence de l'agent intermédiaire, au lieu de mettre au point une régulation frigorifique sophistiquée dont la fiabilité serait cruciale, la solution proposée est simple, robuste et d'une fiabilité certaine. En effet, l'agent intermédiaire, qui assure la diffusion thermique à une vitesse choisie, permet d'atténuer les variations de température de l'air en sortie de l'échangeur et donc d'éviter de sur-refroidir l'air comprimé et d'entraîner la destruction de l'échangeur.

L'agent intermédiaire peut être un liquide, un solide monobloc ou particulaire, un gaz, un gel ou un mélange de deux au moins de ces corps.

Selon un autre aspect avantageux de l'invention, l'échangeur de chaleur comprend des plaques d'écartement des deux circuits, disposés perpendiculairement aux tubes de l'un des circuits et parallèlement aux tubes de l'autre circuit et comprenant des orifices de passage des tubes auxquels elles sont perpendiculaires et des dépressions formant manchons-supports des tubes auxquels elles sont parallèles. Ces plaques, qui peuvent être produites avec une presse, donc à faible coût, permettent de réaliser une structure solide pour l'échangeur de chaleur.

L'invention concerne également une installation de production d'air comprimé industriel comprenant une centrale de compression et de séchage telle que précédemment décrite.

L'invention sera mieux comprise et d'autres avantages de celle-ci apparaîtront plus clairement à la lumière de la description qui va suivre d'un mode de réalisation d'une centrale de compression et de séchage conforme à son principe, donnée uniquement à titre d'exemple et faite en référence aux dessins annexés dans lesquels :
- la figure 1 est une représentation schématique en perspective d'une centrale de compression et de séchage conforme à l'invention ;
- la figure 2 est une représentation de principe d'un échangeur de chaleur appartenant à la centrale de l'invention et
- la figure 3 est une vue en perspective d'une plaque d'écartement apte à être montée-dans l'échangeur de la figure 2.

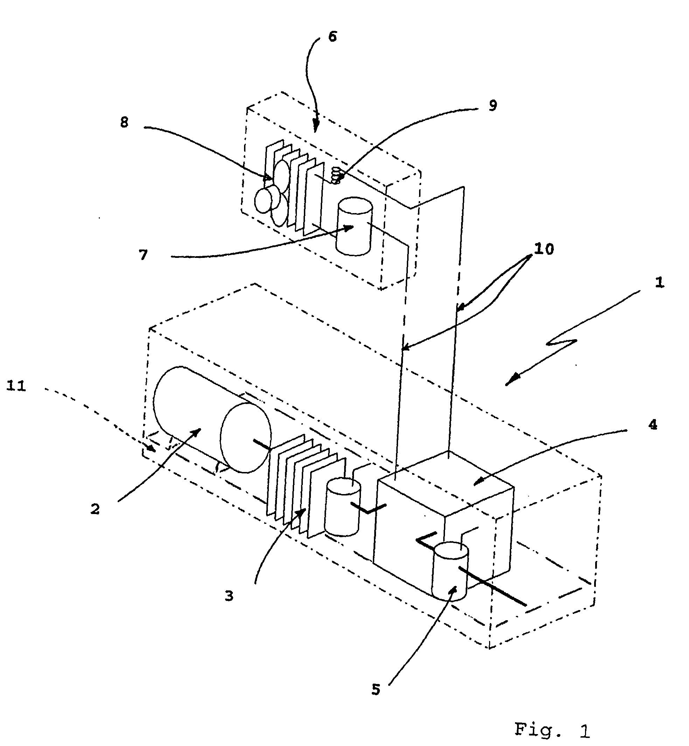

La centrale de compression et de séchage 1 représentée à la figure 1 est destinée à une installation de production d'air comprimé industriel, cette centrale comprend un compresseur 2 à la sortie duquel est installée une unité de pré-traitement 3 apte à refroidir le gaz sortant du compresseur 2, ce gaz pouvant être à température élevée, de l'ordre de 150°C. Un échangeur de chaleur 4 est connecté à la sortie de l'unité de pré-traitement 3 sur la ligne principale de trajet du gaz dans la centrale 1. Un séparateur de condensats 5, disposé à la sortie de l'échangeur de chaleur 4, est apte à séparer l'eau produite dans l'échangeur 4 du gaz comprimé séché.

Conformément à l'invention, une unité de condensation indépendante 6, distante du compresseur 2 et comportant un compresseur frigorifique 7, un condenseur 8 et un détendeur 9, est reliée à l'échangeur de chaleur 4 par un circuit frigorifique 10. Le fluide calorifique utilisé est un fluorocarbone, tel que, par exemple, du CHCIF₂ ou du CH₂-CF₃, ou tout autre fluide dont les propriétés thermiques sont adaptées à sa fonction. L'unité de condensation 6 forme, avec l'échangeur 4 et le séparateur 5, un sécheur dé gaz. L'unité 6 peut être séparée de l'atmosphère chaude dans laquelle travaillent le compresseur 2 et l'unité de pré-traitement 3. Le fonctionnement de l'unité de condensation 6 peut ainsi avoir lieu dans des conditions optimales. Avantageusement, l'unité 6 peut être placée à l'extérieur du local dans lequel sont installés les éléments 2 à 5.

De plus, l'échangeur 4 et l'unité 6 peuvent être choisis et dimensionnés indépendamment, ce qui permet d' optimiser leurs caractéristiques en fonction des conditions d'utilisation et, en particulier, des conditions climatiques.

Conformément à l'invention, l'unité 6 forme une structure autonome apte à être déplacée et installée de façon unitaire. Ainsi, l'unité 6 peut être réalisée en atelier dans de bonnes conditions de travail et testée, de sorte que, lorsqu'elle parvient sur son site d'utilisation final, on est sûr qu'elle est apte à remplir la fonction à laquelle elle est destinée. En particulier, l'unité 6 peut être une unité de condensation identique à celle utilisée dans certaines installations de climatisation et qui sont produites en très grande série, donc avec des coûts relativement faibles.

Selon un premier aspect avantageux, le compresseur 2, l'unité 3, l'échangeur de chaleur 4 et le séparateur de condensats 5 sont montés sur un cadre commun 11, de façon à former une structure autonome apte à être déplacée et installée de façon unitaire. Cet aspect de l'invention permet aussi une diminution du temps de montage sur site et la possibilité de réaliser un test fonctionnel des éléments 2 à 5 avant leur expédition sur leur site de montage.

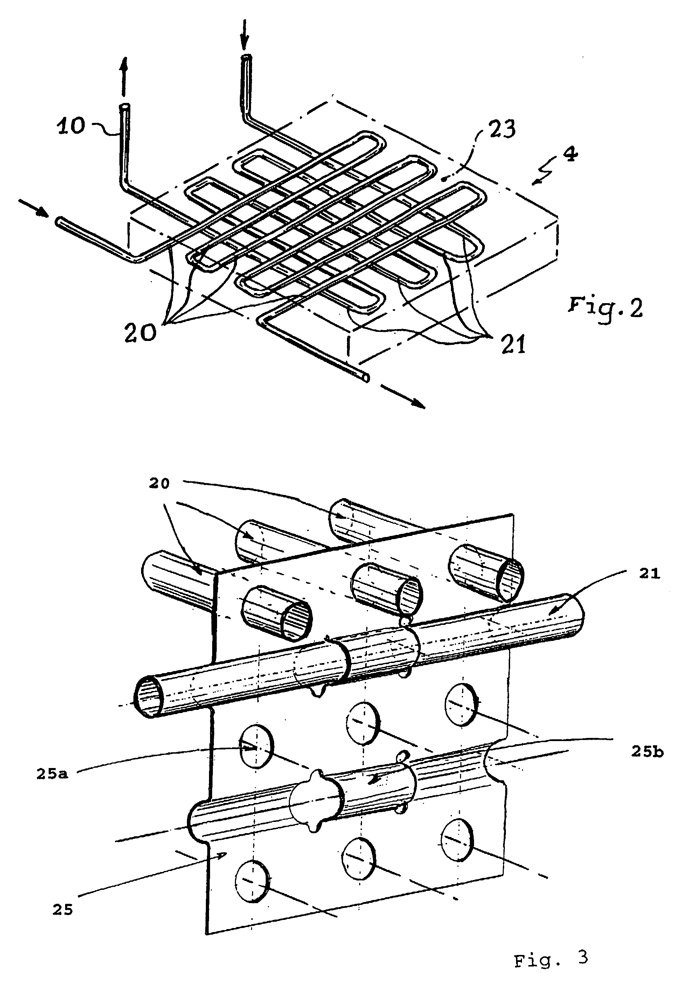

Comme il apparaît plus clairement à la figure 2, l'échangeur de chaleur 4, comprend un premier circuit, formé de tubes 20, dans lequel circule le gaz comprimé et un second circuit, formé de tubes 21, dans lequel circule le fluide frigorifique. Les tubes 20 sont parallèles entre eux et les tubes 21 sont aussi parallèles entre eux. Les tubes 20 et 21 sont globalement perpendiculaires.

Les circuits formés des tubes 20 et 21 sont disposés dans un agent intermédiaire 23 qui les entoure et assure le transfert thermique entre les tubes 20 et les tubes 21, c' est-à-dire entre les deux circuits. Cet agent intermédiaire est choisi en fonction de son inertie thermique pour éviter que les variations du débit de gaz transitant dans les tubes 20 ne conduisent, en cas de faible consommation de gaz, à un sur-refroidissement de celui-ci, ce qui aurait pour conséquence la formation de glace dans l'échangeur 4 et sa possible destruction.

L'agent intermédiaire peut être disposé dans l'échangeur 4, qui est pourvu d'une enceinte fermée, lorsque les tubes 20 et 21 sont en place. Il peut s'agir d'un liquide, d'un solide, monobloc au particulaire, d'un gaz ou d'un gel. Il peut être formé d'un corps simple, ou d'un mélange de ceux envisagés ci-dessus. Cet agent intermédiaire peut être réalisé à base de métal, de matière plastique ou de tout autre matériau approprié, tel que de l'eau glycolée, du sable, etc...

Selon un aspect particulièrement avantageux de l'invention, des plaques d'écartement 25 sont disposées dans l'échangeur de chaleur 4 et maintiennent les tubes 20 et 21 à distance pour éviter un transfert direct des calories ou des frigories d'un circuit de tubes à l'autre. Ces plaques 25, dont une est représentée à la figuré 3, sont disposées perpendiculairement aux tubes d'un circuit, par exemple les tubes 20, et parallèlement aux tubes de l'autre circuit, par exemple les tubes 21. Pour la clarté du dessin, les tubes 20 et 21 sont représentés seulement dans la partie supérieure de la plaque 25.

Chaque plaque 25 comprend des orifices 25a de passage des tubes auxquels elle est perpendiculaire et des dépressions 25b formant manchons-supports des tubes 21 auxquels elle est parallèle. Les orifices 25a ont une forme analogue à la surface extérieure des tubes 20. Si les tubes 20 sont circulaires, ce qui est généralement le cas, on peut prévoir que les orifices 25a sont aussi circulaires. Les dépressions 25b forment chacune une moitié d'un manchon supportant les tubes 21. Sur une section correspondant au parcours d'un tube 21 le long de la plaque 25, au moins deux dépressions 25b se succèdent en étant disposées de part et d'autre de la surface principale de la plaque 25. Ainsi, le tube 21 représenté à la figure 3 passe-t-il devant une première dépression 25b située sur la gauche de la figure 3, puis derrière une seconde dépression 25b située dans la partie centrale et, enfin, devant une troisième dépression 25b située sur la droite. Un manchon est formé par la succession de deux dépressions car leur coopération limite les mouvements du tube 21 à la fois vers l'avant et vers l'arrière de la plaque 25 dans la position de la figure 3.

Le nombre de dépressions disposées, sur le trajet d'un tube 21, dans la largeur de la plaque 25, est supérieur ou égal à deux. Plusieurs manchons peuvent être formés sur la largeur de la plaque 25 par une succession de dépressions alternativement situées de part et d'autre de la surface principale de la plaque 25. La géométrie des dépressions 25b est définie en fonction de celle des tubes 21 afin qu'elles épousent sensiblement la forme extérieure de ces derniers.

Les plaques 25 sont faciles à fabriquer, par exemple à l'aide d'une presse, et permettent de réaliser la fonction d'écartement recherchée à faible coût. En effet, aucune pièce ne doit être rapportée sur les plaques 25 pour leur permettre de supporter deux réseaux de tubes qui sont perpendiculaires entre eux.

A la figure 2, dans un but de simplification, les circuits de tubes 20 et 21 ont été représentés en deux nappes distinctes superposées, sans les plaques 25, mais il apparaît à la figure 3 que les tubes 20 et 21 peuvent être disposés en plusieurs nappes superposées.

## Revendications

1. Centrale (1) de compression et de séchage de gaz pour une installation de production d'air comprimé industriel, ladite centrale comprenant un compresseur (2), une unité de pré-traitement (3) , et un sécheur de gaz (4-6), ledit sécheur de gaz comprenant un échangeur (4) de chaleur disposé sur le trajet dudit gaz, en aval et à proximité dudit compresseur, et une unité de condensation (6) indépendante, distante dudit compresseur et comportant un compresseur frigorifique (7), un condenseur (8) et un détendeur (9), ladite unité de condensation étant reliée audit échangeur de chaleur par un circuit (10) de fluide frigorifique, ladite unité de condensation (6) formant une structure autonome apte à être déplacée et installée de façon unitaire, alors que ledit échangeur de chaleur (4) est relié à ladite unité de condensation (6) de façon qu'il fasse office d'évaporateur pour le fluide frigorifique.

2. Centrale de compression et de séchage selon la revendication 1, dans laquelle ledit compresseur (2), ladite unité de pré-traitement (3), ledit échangeur de chaleur (4) et un séparateur de condensats (5) forment une structure autonome apte à être déplacée et installée de façon unitaire.

3. Centrale de compression et de séchage selon l'une des revendication 1 ou 2, dans laquelle ledit échangeur de chaleur (4) comprend un premier circuit dans lequel circule le gaz comprimé et un second circuit dans lequel circule le fluide frigorifique, alors que chaque circuit a la forme d'un groupe de tubes (20, 21) parallèles et en ce que lesdits circuits sont disposés ensemble dans un agent intermédiaire (23) qui les entoure et assure le transfert thermique entre lesdits deux circuits.

4. Centrale de compression et de séchage selon la revendication 3, dans laquelle ledit agent intermédiaire (23) est un liquide, un solide monobloc ou particulaire, un gaz, un gel ou un mélange de deux au moins de ces corps.

5. Centrale de compression et de séchage selon l'une des revendications 1 à 4, dans laquelle ledit échangeur de chaleur (4) comprend un premier circuit dans lequel circule le gaz comprimé et un second circuit dans lequel circule le fluide frigorifique alors que chaque circuit a la forme d'un groupe de tubes (20, 21) parallèles entre eux, lesdits deux circuits étant globalement perpendiculaires entre eux.

6. Centrale de compression et de séchage selon la revendication 5, dans laquelle ledit échangeur de chaleur (4) comprend des plaques d'écartement (25) desdits deux circuits, disposées perpendiculairement aux tubes (20) de l'un des circuits et parallèlement aux tubes (21) de l'autre circuit et comprenant des orifices (25a) de passage des tubes auxquels elles sont perpendiculaires et des dépressions (25b) formant manchons-supports des tubes auxquels elles sont parallèles.

7. Centrale de compression et de séchage selon la revendication 6, dans laquelle le nombre de dépressions (25b) disposées, dans la largeur de ladite plaque (25), sur le trajet d'un tube (21) auquel elle est parallèle, est supérieur ou égal à deux.

8. Centrale de compression et de séchage selon la revendication 6, dans laquelle lesdites dépressions (25b) sont disposées, alternativement, de part et d'autre de la surface principale de ladite plaque (25).

9. Installation de production d'air comprimé industriel comprenant une centrale de compression et de séchage selon l'une des revendications précédentes.

## Patentansprüche

1. Komprimierendes und trocknendes System (1) für eine Produktion Station der industriellen Druckluft, das vorher erwähnte System einschließend einen Kompressor (2), eine Aufbereitung Vorrichtung (3) und ein Gastrockner (4-6) der vorher erwähnte Gastrockner einschließend einen Wärmeaustauscher (4) ausgebritten auf der Weise des vorher erwähnten Gases, stromabwärts und nähern sich vom vorher erwähnten Kompressor (2) und eine unabhängige Kondensationeinheit (6) weit von den vorher erwähnten Kompressor (2) und das einschließend einen Abkühlungkompressor (7), einen Kondensator (8) und eine Ausdehnungsventil (9), die vorher erwähnte Kondensationeinheit, die an den besagten Wärmeaustauscher durch einen kühlenden flüssigen Stromkreis (10) angeschlossen wird, die vorher erwähnte Kondensationseinheit, die einen Standplatz allein formt, strukturiert bereit, bewegt und in eins Satz installiert zu werden, während der vorher erwähnte Wärmeaustauscher (4) mit der vorher erwähnten Kondensationeinheit (6) angeschlossen wird, damit sie als ein Verdampfer für das Kältemittel dient.

2. Komprimierendes und trocknendes System nach dem Anspruch 1, in dem der vorher erwähnte Kompressor (2), die vorher erwähnte Aufbereitung Vorrichtung (3), der vorher erwähnte Wärmeaustauscher (4) und ein Kondensatabscheider (5) die einen Standplatz allein formt, strukturiert bereit, bewegt und in eins Satz installiert zu werden.

3. Komprimierendes und trocknendes System nach einem der Ansprüche 1 oder 2, in denen der vorher erwähnte Wärmeaustauscher (4) einen ersten Stromkreis einschließt, in dem das Druckgas fließt und einen zweiten Stromkreis, in dem die das Kältemittel fließt, während jeder Stromkreis die Form einer Gruppe von parallelen Schläuche (20, 21) hat in was die vorher erwähnten Stromkreise zusammen in einem Zwischenagenten angelegt werden, welcher sie umgibt und die thermische Übertragung zwischen den vorher erwähnten zwei Stromkreise stellt.

4. Komprimierendes und trocknendes System nach dem Anspruch 3, in dem das vorher erwähnte Zwischenagenten (23) Gas, ein Gel oder eine Mischung von zwei mindestens dieser Bestandteile ist.

5. Komprimierendes und trocknendes System nach einem der Ansprüche 1 bis 4, in denen der vorher erwähnte Wärmeaustauscher (4) einen ersten Stromkreis einschließt, in dem das Druckgas fließt und einen zweiten Stromkreis, in dem das Kältemittel fließt, während jeder Stromkreis die Form einer Gruppe von parallelen Schläuche (20, 21) hat, den zwei besagten Stromkreis insgesamt Senkrechtes sind.

6. Komprimierendes und trocknendes System nach Anspruch 5, in dem der vorher erwähnte Wärmeaustauscher (4) die Platten miteinschließt (25), welche die vorher erwähnten zwei Stromkreise sperren, senkrecht ausgebritten zu den Schläuchen (20) von dem ersten Stromkreis und parallele zu den Schläuchen (21) der zweite Stromkreis und einschließt Öffnungen (25A) für die Schläuche, zu denen sie senkrecht sind und Senkung (25B) Unterstützungen für die Schläuche bildend, zu denen sie parallel sind.

7. Komprimierendes und trocknendes System nach dem Anspruch 6, dem die Zahl der Senkung (25b) ausgebritten in der Breite der vorher erwähnten Platte (25), auf der Weise eines Schlauches (21), zu dem sie parallel ist, größer oder gleich zwei ist.

8. Komprimierendes und trocknendes System nach Anspruch 6, in dem der vorher erwähnte Senkung (25b) wechselweise ausgebritten wird an beide Seiten der Hauptoberfläche der vorher erwähnten Platte (25).

9. Produktion Station der industriellen Druckluft einschließend eine Komprimierendes und trocknendes System nach einer der vorausgegangenen Ansprüche.

## Claims

1. Compression and drying system (1) for a production station of industrial compressed air, the aforementioned system including a compressor (2), a preprocessing device (3) and a gas dryer (4-6) the aforementioned gas dryer including a heat exchanger (4) laid out on the way of the aforesaid gas, downstream and near of the aforesaid compressor (2), and a separate condensation unit (6) far from the aforesaid compressor (2) and including a refrigeration compressor (7), a condenser (8) and an expansion valve (9), the aforementioned condensation unit being connected to the said heat exchanger by a refrigerating fluid circuit (10), the aforementioned condensation unit (6) forming a stand alone structure ready to be moved and installed in one set, whereas the aforementioned heat exchanger (4) is connected with the aforementioned condensation unit (6) so that it acts as an evaporator for the refrigeration fluid.

2. Compression and drying system according to the claim 1, in which the aforementioned compressor (2), the aforementioned preprocessing device (3), the aforementioned heat exchanger (4) and a separator of condensates (5) form a stand alone structure ready to be moved and installed in one set.

3. Compression and drying system according to one of the claims 1 or 2, in which the aforementioned heat exchanger (4) includes a first circuit in which circulates the compressed gas and a second circuit in which circulates the refrigerating fluid, whereas each circuit has the form of a group of parallel tubes (20, 21) and in what the aforementioned circuits are laid out together in an intermediate agent (23) which surrounds them and ensures the thermal transfer between the aforementioned two circuits.

4. Compression and drying system according to the claim 3, in which the aforementioned intermediate agent (23) is a liquid, a cast or particulate solid, gases, a gel or a mixture of at least two of these components.

5. Compression and drying system according to one of the claims 1 to 4, in which the aforementioned heat exchanger (4) includes a first circuit in which circulates the compressed refrigerating fluid whereas each circuit has the form of a group of tubes (20, 21) parallel between them, the said two circuit being overall perpendicular between them.

6. Compression and drying system according to claim 5, in which the aforementioned heat exchanger (4) includes plates (25) spacing the aforesaid two circuits, perpendicularly laid out to the tubes (20) of the one of the circuits and parallel to the tubes (21) of the other circuit and including openings (25a) for the tubes to which they are perpendicular and depressions (25b) forming sleeves supports for the tubes to which they are parallel.

7. Compression and drying system according to the claim 6, in which the number of depressions (25b) laid out in the width of the aforementioned plate (25), on the way of a tube (21) to which it is parallel, is equal to or higher than two.

8. Compression and drying system according to claim 6, in which the aforementioned depressions (25b) are laid out, alternatively, on both sides of the principal surface of the aforementioned plate (25).

9. Production station of industrial compressed air including a compression and drying system according to one of the preceding claims.
